# EUROPEAN PATENT APPLICATION

(11) **EP 1 499 141 A2**
(43) Date of publication of application: **19.01.2005**
(21) Application number: 04005486.8
(22) Date of filing: 08.03.2004
(51) Int. Cl.: H04Q 7/32

(54) **Mobile communication terminal and discontinuous reception method thereof**

(30) Priority: 16.07.2003 JP 2003197855
(71) Applicant: Kabushiki Kaisha Toshiba, Minato-ku, Tokyo 105 (JP)
(72) Inventor: Iimori, Eiji, Toshiba Corporation, Minato-ku Tokyo 105-8001 (JP)
(74) Representative: HOFFMANN - EITLE

(57) **Abstract**

In a wake-up period set by discontinuous reception control of a mobile communication terminal, reception level detecting means (71) detects the reception quality of a signal transmitted from a base station and judges the quality level. When the reception quality level is judged low, a wake-up control section (83) wakes up the mobile communication terminal at a first wake-up timing targeted for reception start timing of a TFCI (Transport Format Combination Indicator) transmitted from the base station through a SCCPCH (Secondary Common Control Pilot Channel). The mobile communication terminal receives the TFCI at this timing. TFCI determination means (82) determines the probability of paging based on the received TFCI. If the TFCI determination means (82) determines that there is no possibility of paging, sleep control means (84) skips the process of decoding the paging data received together with the TFCI, and enters the sleep period.

## Description

The present invention relates to a mobile communication terminal used in a radio communication system, such as a car phone or cellular phone system or a radio LAN, more particularly to a mobile communication terminal, which performs a discontinuous reception sequence in a standby status, and also to a discontinuous reception method of the mobile communication terminal.

In a cellular mobile communication network system, a plurality of base stations are distributed in a service area. Each base station forms a radio zone, which is called a cell. In the cell, the base station is wirelessly connected to mobile communication terminals. In this type of system, when a mobile communication terminal is powered on, synchronization between the mobile communication terminal and the nearest base station is established. If the mobile communication terminal moves from one cell to another, synchronization with another base station in the latter cell is established. After the synchronization is established, the mobile communication terminal enters a standby status.

In the standby status, the mobile communication terminal performs a discontinuous reception sequence. In the discontinuous reception sequence, a wake-up period and a sleep period are set alternately in a given standby cycle. This sequence reduces power consumption of the mobile communication terminal. The wake-up period is set in a reception period for frames allocated to a mobile communication terminal of a plurality of frames that the base station transmits through a paging channel. The reception period for the other frames is set as the sleep period.

For example, in a mobile communication system employing the WCDMA (Wideband Code Division Multiple Access) system in compliance with 3GPP (3^{rd} Generation Partnership Project), 0-4095 frames are transmitted through the paging channel (PCH). A mobile communication terminal receives frames allocated to itself of all the 0-4096 frames in 256-frame cycle. However, to receive paging data inserted in the frames in the PCH, the subject mobile communication terminal requires deinterleave and a Viterbi decoding process each time, even if the paging data addressed to the terminal itself is not inserted. Therefore, large power is consumed in the wake-up period.

To avoid the above drawback, the mobile communication terminal receives data through a PICH (Paging Indicator Channel) prior to receiving data through the PCH. The PICH is a channel for transmitting paging indicator data that has not been subjected to channel coding. A possibility of paging is determined on the basis of the paging indicator data received through the PICH. Only when there is a possibility of paging, the PCH is received, so that the paging data is a decoding/reproducing process. Thus, in the mobile communication terminal, the PCH is received only when the possibility of paging is confirmed by the PICH, and not received in the other time. Consequently, the mobile communication terminal consumes less power.

The above sequence is described in detail in "3GPP TS25.211", Version V5.30, pp. 28-29 and 44-45, [online] <URL:http://www.3gpp.org/ftp/specs/archive/25 series/25 .21/>.

However, as described above, the paging indicator data in the PICH has not been subjected to channel coding. Therefore, if the transmission path environment deteriorates, it will be difficult to accurately determine whether there is a possibility of paging based on the received paging indicator data. In this case, the probability of the mobile communication terminal responding to paging addressed to itself, i.e., the paging completion probability, is lowered.

An object of the present invention is to provide a mobile communication terminal, which consumes less power in a reception period without lowering the paging completion probability, and to provide a discontinuous reception method of the mobile communication terminal.

To achieve the above object, according to an aspect of the present invention, the reception quality of a signal transmitted from a base station is detected and the quality level is judged in the wake-up period set by the discontinuous reception control. When the reception quality level is judged low, the mobile communication terminal wakes up at a first wake-up timing targeted for reception start timing of a TFCI (Transport Format Combination Indicator) transmitted from the base station through a SCCPCH (Secondary Common Control Pilot Channel). The mobile communication terminal receives the TFCI at this timing and determines the probability of paging based on the received TFCI. If it determines that there is no possibility of paging, it skips over the process of decoding the paging data received together with the TFCI, and enters the sleep period.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the structure of a mobile communication terminal according to an embodiment of the present invention;
FIG. 2 is a flowchart showing a wake-up mode setting control sequence by the mobile communication terminal shown in FIG. 1 and contents of the sequence;
FIG. 3 is a flowchart showing a discontinuous reception sequence by the mobile communication terminal shown in FIG. 1 and contents of the sequence;
FIG. 4 is a diagram showing frame formats of a PCH and a PICH transmitted from a base station;
FIG. 5 is a timing chart for explaining the discontinuous reception sequence by the mobile communication terminal shown in FIG. 1;
FIG. 6 is a diagram showing formats of data and a TFCI received by one frame of the PCH;
FIG. 7 is a table showing the relationship between the TFCI and the data indicated by the TFCI;
FIG. 8 is a table showing the channel coding methods of the PICH, PCH and TFCI and the error correction capability thereof; and
FIG. 9 is a characteristic diagram showing change in the PICH, PCH and TFCI with respect to the transmission path environment.

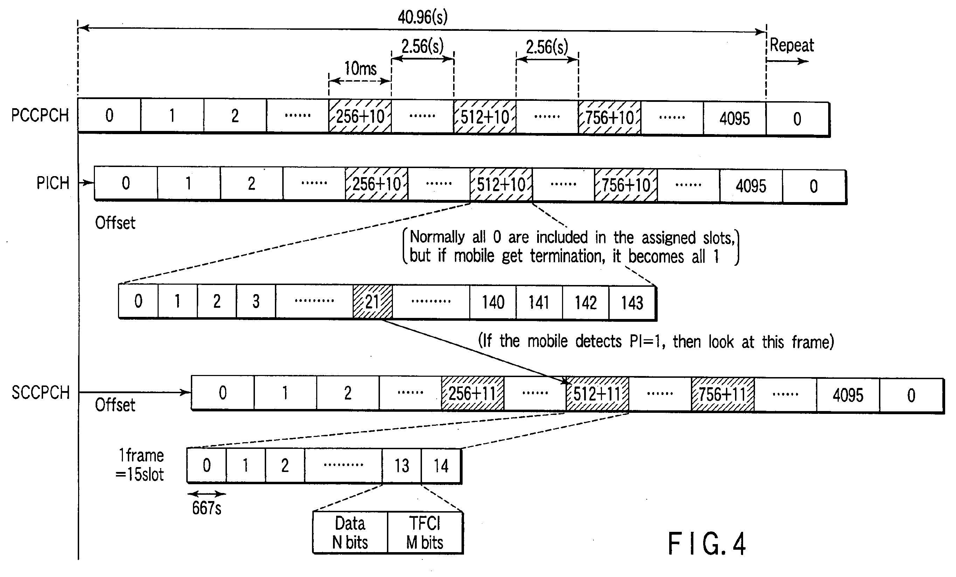

An example will be described, in which the present invention is applied to a mobile communication system employing a WCDMA (Wideband Code Division Multiple Access) in compliance with the 3GPP. The frame formats of control channels, through which a base station in this system transmits data to a mobile communication terminal in the standby status, will be described first. FIG. 4 is a diagram showing examples of the formats.

The control channels, which the base station transmits to the mobile communication terminal in the standby status, include a PCCPCH (Primary Common Control Pilot Channel), a SCCPCH (Secondary Common Control Pilot Channel) and a PICH (paging indicator CH).

Each of the PCCPCH, SCCPCH and PICH is formed of 4095 frames assigned the numbers 0 to 4095, called SFN (System Frame Number). There is a predetermined offset between the transmission timings of the PCCPCH, SCCPCH and PICH. The 0 to 4095 frames are divided at every 256 frames for convenience of operation. One of the 256 frames is allocated fixedly to one mobile communication terminal. In other words, the base station repeatedly transmits signals at a 256-frame cycle (2.56 sec) to the individual mobile communication terminals. Therefore, it is only necessary that each mobile communication terminal discontinuously receive the frame allocated to itself at the 256-frame cycle.

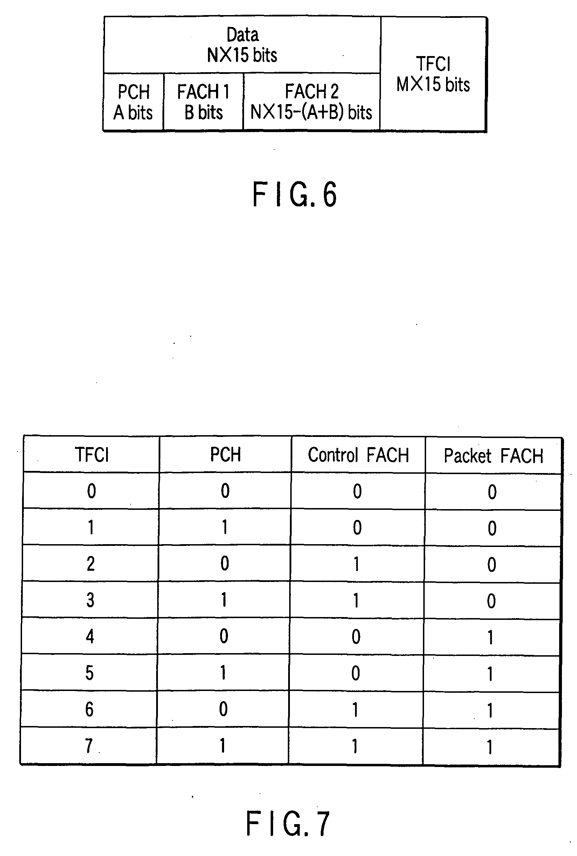

The SCCPCH transmits a pilot signal necessary for the mobile communication terminal to establish synchronization with the bas station. In the SCCPCH, one frame is divided into 15 slots. Bits are dispersedly inserted in the 15 slots, so that data and the TFCI (Transport Format Combination Indicator) are transmitted. The data includes paging data transmitted through the PCH (paging channel), control FACH data transmitted trough a FACH1 (Forward Access Channel 1) and packet FACH data transmitted through a FACH2 (Forward Access Channel 2). FIG. 6 shows the structure of the data.

The TFCI is transmitted in order for the mobile communication terminal to correctly grasp the structure of the data in the frame, so that a correct decoding process can be carried out in rate matching, etc. FIG. 7 shows the relationship between the TFCI and the control FACH and packet FACH indicated by the TFCI.

In the PICH, one frame is divided in to 144 positions. One of the positions is allocated to one mobile communication terminal. The base station transmits paging indicator data using the position allocated to the mobile communication terminal.
The paging indicator data is notifies the mobile communication terminal of the probability of paging. The paging indicator data has not been subjected to channel coding. Therefore, the mobile communication terminal can check the probability of paging addressed to itself without a deinterleave or Viterbi decoding process.

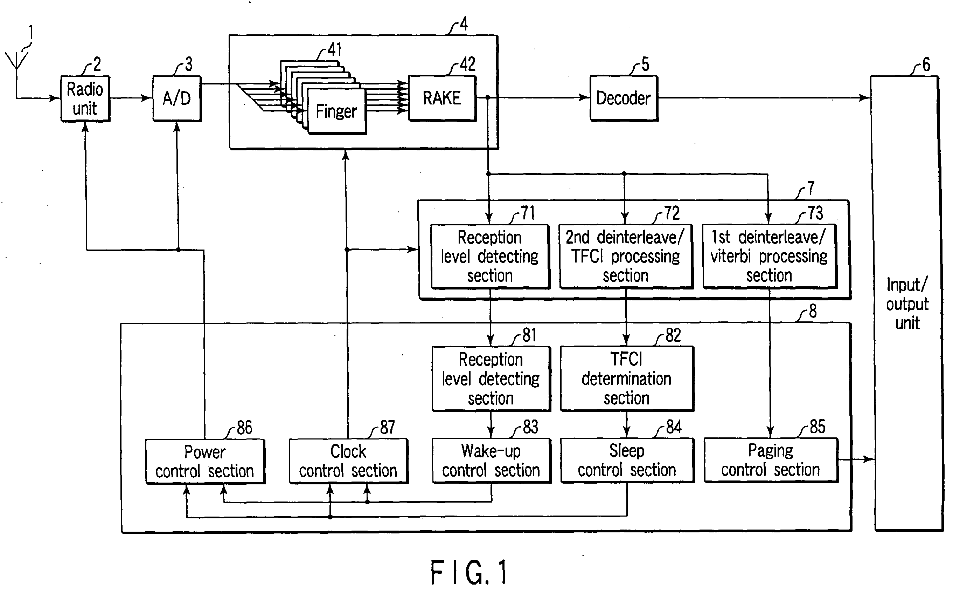

FIG. 1 is a block diagram showing a mobile communication terminal according to an embodiment of the present invention.

A radio signal transmitted from a base station (not shown) is received through an antenna 1 and input to a radio unit 2. The radio unit 2 comprises a low noise amplifier, a frequency converter, and a quadrature demodulator. The low noise amplifier amplifies the received radio signal. The frequency converter and the quadrature demodulator demodulate the amplified radio signal, and convert the demodulated signal to a received baseband signal. The received baseband signal is converted to a digital signal by an analog/digital converter (A/D) 3 and input to a demodulation unit 4.

The demodulation unit 4 comprises a plurality of finger circuits 41 and a RAKE synthesizer 42. The baseband signal includes a plurality of passes, which are received through different transmission paths.
The finger circuits 41 despreads these passes respectively by spreading codes. The RAKE synthesizer 42 makes the demodulated signals output from the finger circuit 41 in phase, and symbol-synthesizes them.

Digital demodulated data output from the RAKE synthesizer 42 is input to a decoder 5. The decoder 5 performs channel-decoding of the input digital demodulated data, and thereafter speech-decoding and image-decoding. Then, the decoder 5 inputs the decoded information data to an input/output unit 6. The input/output unit 6 comprises a microphone, a speaker, a key input device, a display device, etc. Of the decoded information data, speech data is output through the speaker, and image data is displayed in the display device.

The mobile communication terminal of this embodiment comprises a digital signal processor (DSP) 7 and a central processing unit (CPU) 8. The DSP 7 and the CPU 8 form a control unit of the reception system.

The DSP 7 has a reception level detecting section 71, a second deinterleave/TFCI processing section 72 and a first deinterleave/Viterbi processing section 73 as signal processing functions relating to the present invention.

The reception level detecting section 71 detects a reception level Eserve of a pilot signal transmitted from a serving base station based on the input digital demodulated data. The second deinterleave/TFCI processing section 72 performs a second deinterleave process and a TFCI process of the data and TFCI received through the SCCPCH. The first deinterleave/Viterbi processing section 73 performs a first deinterleave process and a Viterbi demodulation process of the data received through the SCCPCH.

The CPU 8 comprises a wake-up mode determination section 81, a TFCI determination section 82, a wake-up control section 83, a sleep control section 84, a paging control section 85, a power control section 86 and a clock control section 87.

The wake-up mode determination section 81 compares the reception level Eserve detected by the reception level detecting section 71 with a preset threshold value Thplstop. Based on the result of the comparison, the wake-up mode determination section 81 determines whether the wake-up mode should be the PICH mode or the TFCI mode. The wake-up control section 83 sets wake-up timing corresponding to the wake-up mode determined by the wake-up mode determination section 81. For example, in the PICH mode, the mobile communication terminal sets the wake-up timing to be targeted for the reception start timing of the frame of the PICH allocated to itself. On the other hand, in the TFCI mode, the mobile communication terminal sets the wake-up timing to be targeted for the TFCI reception timing of the frame of the SCCPCH allocated to itself. The wake-up control section 83 executes the wake-up sequence at the above-described wake-up timing.

The TFCI determination section 82 determines whether there is a paging probability based on the decode result of the TFCI obtained by the second deinterleave TFCI processing section 72. The sleep control section 84 determines the timing of executing the sleep preparation process individually depending on the result of the determination of the TFCI determination section 82 as to whether there is a paging probability. For example, if there is a paging probability, the sleep control section 84 performs the first deinterleave process and the Viterbi demodulation process after the second deinterleave/TFCI process. Thereafter, the sleep control section 84 determines whether there is a probability paging addressed to itself. The timing of executing the sleep preparation process is determined such that the mobile communication terminal enters the sleep status after these processes. On the other hand, if there is no probability of paging, the timing of executing the sleep preparation process is determined such that the mobile communication terminal enters the sleep status after the completion of the second deinterleave/TFCI process.

When paging addressed to itself occurs, the paging control section 85 executes a series of well-known control sequences to notify the paging and respond thereto. The power control section 86 turns on and off the power supply to the radio unit 2 and the A/D 3 at the wake-up timing and the sleep preparation execution timing determined by the wake-up control section 83 and the sleep control section 84. The clock control section 87 turns on and off the supply of an operation clock to the demodulation unit 4, the DSP 7 and the decoder 5 at the wake-up timing and the sleep preparation execution timing determined by the wake-up control section 83 and the sleep control section 84.

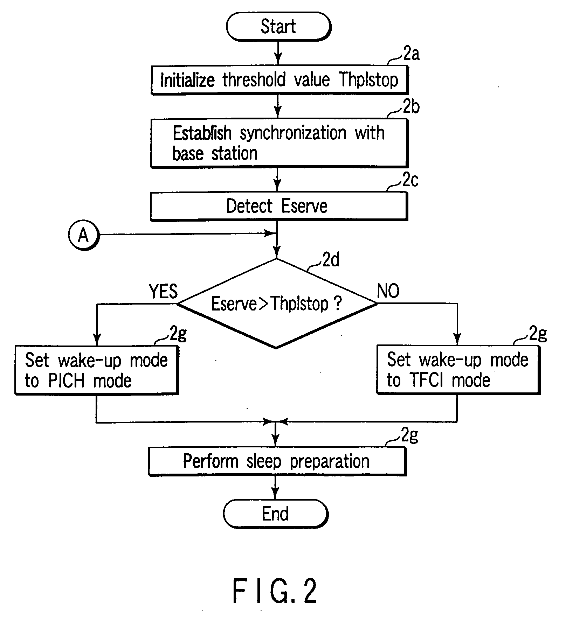

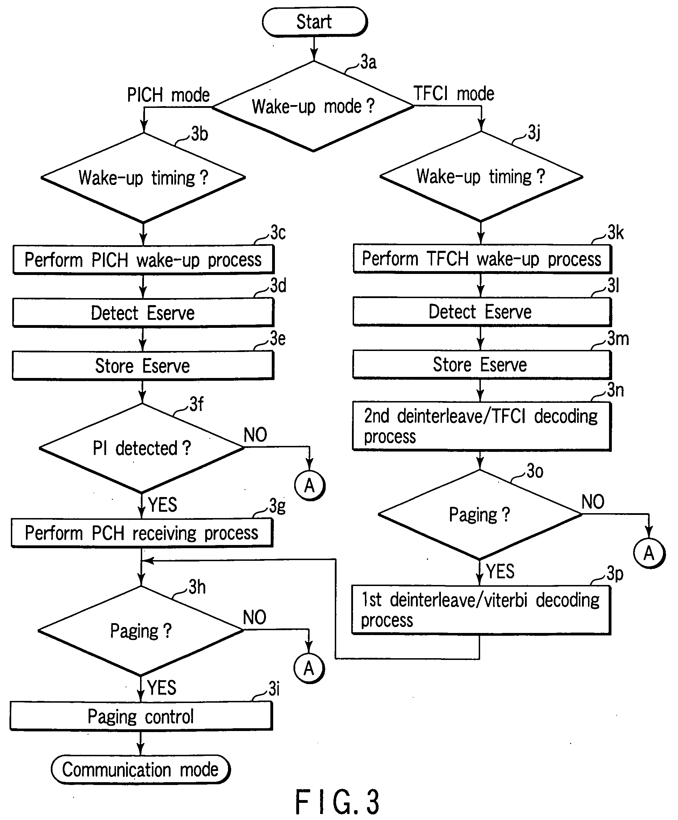

The discontinuous reception operation in the mobile communication terminal having the above structure will now be described. FIG. 2 is a flowchart showing a wake-up mode setting control sequence and contents of the sequence. FIG. 3 is a flowchart showing a discontinuous reception sequence and contents of the sequence.

Prior to the discontinuous reception sequence, the CPU 8 sets the threshold value Thplstop in a step 2a. The threshold value Thplstop is used to determine the reception level Eserve of the pilot signal transmitted from the serving base station.

When the mobile communication terminal is powered on or moved from one cell to another cell, the CPU 8 executes a process to establish synchronization with the nearest base station in a step 2b. When the synchronization is established, the DSP 7 detects the reception level Eserve of the pilot signal transmitted from the base station with which the synchronization is established (the serving base station) in a step 2c.

In a step 2d, the CPU 8 compares the detected reception level Eserve with the preset threshold value Thplstop. If the reception level Eserve is greater than the threshold level Thplstop, the CPU 8 determines that it is possible to determine the probability of paging by the PICH, and sets the wake-up mode to the PICH mode in a step 2e. On the other hand, if the reception level Eserve is not greater than the threshold level Thplstop, the CPU 8 determines that it is difficult to determine the probability of paging by the PICH, and sets the wake-up mode to the TFCI mode in a step 2f.

When the above process of setting the wake-up mode is completed, the CPU 8 enters a step 2g, and performs the sleep preparation process. In the sleep preparation process, the CPU 8 performs a process of storing the current synchronization establishment information, a process of stopping the power supply to the radio unit 2 and the A/D 3 by the power control section 86, and a process of stopping the supply of the operation clock to the demodulation unit 4, the decoder 5 and the DSP 7 by the clock control section 87. After the completion of these processes, the mobile communication terminal enters the sleep status.

In the sleep status, the CPU 8 determines the currently set wake-up mode in a step 3a shown in FIG. 3, and sets the wake-up timing corresponding to the set wake-up mode. For example, if the PICH mode is set, the CPU 8 sets the wake-up timing to be targeted for the reception start timing of the frame of the PICH allocated to its own mobile communication terminal. On the other hand, if the TFCI mode is set, the CPU 8 sets the wake-up timing to be targeted for the TFCI reception timing of the frame of the SCCPCH allocated to the mobile communication terminal itself.

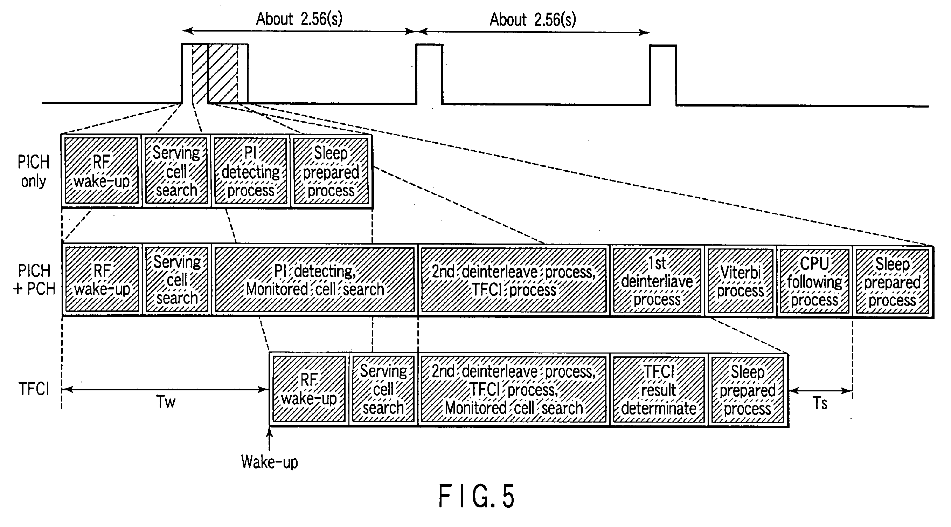

If the PICH mode is set, the CPU 8 monitors in a step 3b whether the set wake-up timing has come. When the wake-up timing has come, the CPU 8 executes the PICH wake-up process in a step 3c. In the PICH wake-up process, the CPU 8 performs a process of starting the supply of the operation clock to the demodulation unit 4, the decoder 5 and the DSP 7 by the clock control section 87 and a process of starting the power supply to the radio unit 2 and the A/D 3 by the power control section 86. Then, serving cell search as shown in FIG. 5 is performed in a step 3d, and the reception level Eserve of the pilot signal transmitted from the serving station is detected by the DSP 7. The detected reception level Eserve is stored in a memory of the CPU 8 in a step 3e.

Then, the CPU 8 performs a process for detecting PI (paging indicator data) from the digital demodulated signal of the PICH. As a result of the detection, if no PI is detected, the CPU determines that there is no probability of paging, and shifts from a step 3f to the step 2d shown in FIG. 2. Then, the CPU 8 compares the stored reception level Eserve with the threshold value Thplstop, and resets the wake-up mode in accordance with the comparison result in a step 2e or 2f. Thereafter, the mobile communication terminal enters the sleep status. In other words, in this case, the mobile communication terminal merely receives the PICH as shown in FIG. 5, and immediately returns to the sleep status.

On the other hand, assume that PI is detected in the step 3f. In this case, the CPU 8 performs a PCH receiving process in a step 3g. In the PCH receiving process, the CPU 8 first performs monitored cell search as shown in FIG. 5, in which the reception level of a pilot signal transmitted from a neighboring base station is detected. Thereafter, it performs the second deinterleave process and the TFCI decoding process with respect to the data transmitted through the SCCPCH, and further the first deinterleave process and the Viterbi decoding process with respect the aforementioned data. If there is paging data addressed to itself in the decoded data, the flow advances from a step 3h to a step 3i, in which the CPU 8 controls the paging.

If there is no paging data addressed to itself in the decoded data, the flow advances from the step 3h to the step 2d shown in FIG. 2, in which the wake-up mode is reset in accordance with the result of comparison between the reception level Eserve and the threshold value Thplstop. Then, the mobile communication terminal enters the sleep status.

On the other hand, if the TFCI mode is set as the wake-up mode, the following discontinuous reception control is executed. The CPU 8 monitors in a step 3j whether the wake-up timing for the TFCI mode has come. When the wake-up timing has come, the CPU 8 executes the TFCI wake-up process in a step 3k. As described before, the CPU 8 determines the wake-up timing for the TFCI mode to be targeted for the reception start timing of the TFCI in the frame of the SCCPCH allocated to itself. Therefore, the wake-up timing is delayed by time Tw from that in the PICH mode, as shown in FIG. 5. Accordingly, the power consumption in the mobile communication terminal is reduced by the amount corresponding to the delay time Tw.

When the wake-up process is completed, the CPU 8 performs serving cell search shown in FIG. 5 in a step 31. In the step 31, the reception level Eserve of the pilot signal transmitted from the serving base station is detected by the DSP 7. The detected reception level Eserve is stored in the memory of the CPU 8 in a step 3m.

Thereafter, in a step 3n, the CPU 8 performs the second deinterleave process and the TFCI process with respect to the digital demodulated signal in the SCCPCH, decodes the TFCI, and searches for the monitored cell. Then, the CPU 8 determines whether there is a probability of paging based on the result of decoding in the TFCI in a step 3o. The TFCI represents the presence or absence of data in the PCH, the control FACH and the packet FACH, as shown in FIG. 7. The probability of paging is represented by the presence or absence of the PCH. Therefore, in the cases where the results of decoding the TFCI are "1", "3", "5" and "7" as shown in FIG. 7, it is determined that there is a probability of paging. If the results of decoding of the TFCI are "0", "2", "4" and "6" as shown in FIG. 7, it is determined that there is no probability of paging.

If it is determined that there is a probability of paging, the mobile communication terminal performs the first deinterleave process and the Viterbi decoding process with respect to the received data, and decodes the paging data transmitted by the PCH. Based on the decoded paging data, the mobile communication terminal determines whether paging addressed to itself occurs or not in the step 3h. If it is determined that the paging addressed to itself occurs, the flow advances from the step 3h to the step 3i, and performs the paging control in the step 3i. On the other hand, if it is determined that the paging is not addressed to itself, the flow advances from the step 3h to the step 2d in FIG. 2. Then, the wake-up mode is reset in accordance with the result of comparison between the received level Eserve and the threshold value Thplstop. Thereafter, the mobile communication terminal enters the sleep status.

Assume that it is determined in the step 3o that there is no probability of paging based on the result of decoding of the TFCI. In this case, the CPU 8 is shifted immediately from the step 3o to the step 2d without executing the first deinterleave process and the Viterbi decoding process. Then, the CPU 8 resets the wake-up mode in the steps 2e and 2f, and thereafter executes the sleep preparation process in the step 2g. In other words, the mobile communication terminal immediately returns to the sleep status after judgment of the TFCI as shown in FIG. 5. Therefore, because of not executing the first deinterleave process and the Viterbi decoding process, the operation time of the mobile communication terminal is reduced by the time Ts shown in FIG. 5. Accordingly, the power consumption in the mobile communication terminal is reduced.

As has been described above, it is noted that the probability of paging can be determined through the TFCI transmitted by the SCCPCH. Based on this matter, according to the above embodiment, the wake-up mode is set to the TFCI mode when the reception level Eserve detected by the search of the serving cell is lower than the threshold value Thplstop. The mobile communication terminal wakes up at the targeted timing of receiving the TFCI of the SCCPCH, and determines the probability of paging based on the result of decoding of the TFCI.

Therefore, the probability of paging can be determined more accurately as compared to the case where the probability is determined through the PICH, even if the transmission path environment deteriorates. Moreover, since the mobile communication terminal wakes up at the targeted timing of receiving the TFCI, the wake-up timing is delayed by the time Tw shown in FIG. 5 as compared to the case where the wake-up timing is targeted at the timing of receiving the PICH. As a result, the power consumption of the mobile communication terminal can be reduced.

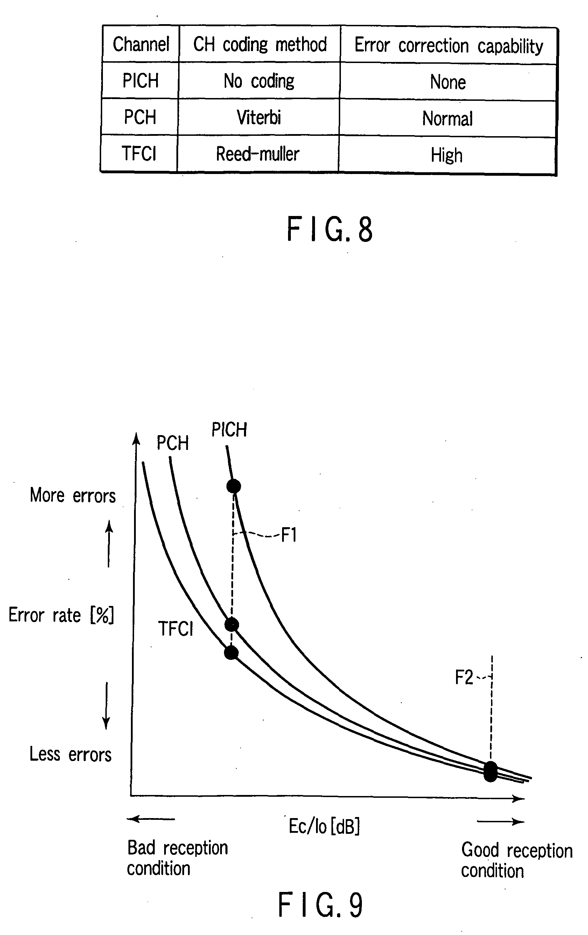

FIG. 8 is a table showing the channel coding methods of the PICH, PCH and TFCI, and FIG. 9 is a characteristic diagram showing changes in PICH, PCH and TFCI with respect to the transmission path environment. As shown in FIG. 8, the TFCI is channel-coded by the Reed-Muller process. Therefore, the TFCI is more resistant to errors than the PCH using the Viterbi process, to say nothing of the PICH which is not channel-coded. Thus, according to this embodiment in which the probability of paging is determined on the basis of the TFCI, accurate determination can be made even under an extremely deteriorated transmission path condition.

Further, in this embodiment, if it is determined from the result of the TFCI decoding that there is no probability of paging, the mobile communication terminal is immediately returned to the sleep status without executing the first deinterleave process and the Viterbi decoding process. Therefore, because of not executing the first deinterleave process and the Viterbi decoding process, the operation time of the mobile communication terminal is reduced by the time Ts shown in FIG. 5. As a result, the power consumption of the mobile communication terminal can be reduced.

When the probability of paging is determined on the basis of the TFCI, it is determined that there is a probability of paging, in the case where there is paging addressed to another terminal in the standby status in the same frame, as well as paging addressed to itself. However, even if there is another terminal in the standby status in the same frame, it cannot be considered that paging frequently occurs in the mobile communication terminal used in the normal state. Consequently, in the TFCI mode, there is a low probability that the received data is subjected to the first deinterleave process and the Viterbi decoding process. Thus, the present invention has a high degree of effectiveness in power reduction.

The present invention is not limited to the embodiment described above. In the above embodiment, the wake-up mode in a discontinuous reception period is set on the basis of the reception level Eserve of the serving cell detected in the previous discontinuous reception period. However, the way of setting the wake-up mode is not limited to this. For example, the reception levels Eserve of the serving cells detected in a plurality of discontinuous reception periods may be averaged, and the wake-up mode in the subsequent discontinuous reception periods may be set on the basis of the averaged value. In this case, the influence by the instantaneous deterioration of the transmission path environment can be reduced.

Further, in the above description of the embodiment, the mobile communication system employing the WCDMA system in compliance with 3GPP is taken as an example. However, the present invention is applicable to another type of radio communication system employing a similar sequence.

## Claims

1. A mobile communication terminal comprising discontinuous reception control means for alternately setting a wake-up period and a sleep period in a standby state, and receiving paging data and first indicator data indicative of a transmission format of a plurality of control data including the paging data, repeatedly transmitted at a fixed cycle through a first control channel from a base station in the set wake-up period, **characterized in that** the discontinuous reception control means comprises:
means (71) for detecting reception quality of a signal transmitted from the base station;
means (81) for determining whether the detected reception quality is high or low;
means (81) for setting a first wake-up timing targeted for timing of starting reception of the first indicator data, when it is determined that the reception quality is low;
means (72), which wakes up the mobile communication terminal at the set first wake-up timing, for receiving the first indicator data; and
first determination means (82) for determining a probability of paging based on the received first indicator data.

2. The mobile communication terminal according to claim 1, **characterized in that** the discontinuous reception control means further comprises means (84) for skipping over a process of decoding paging data received along with the first indicator data and entering a sleep period, when the first determination means (82) determines that there is no probability of paging.

3. The mobile communication terminal according to claim 1, **characterized in that** the means (81) for determining whether the detected reception quality is high or low calculates an average value of reception qualities detected in a plurality of wake-up periods, and compares the calculated average value of the reception qualities with a threshold value, thereby determining whether the detected reception quality is high or low.

4. The mobile communication terminal according to claim 1, **characterized in that** the discontinuous reception control means further comprises:
means (7) for receiving second indicator data transmitted through a second control channel from the base station in the wake-up period, the second indicator data being indicative of presence or absence of transmission of paging data through the first control channel;
means (81) for setting a second wake-up timing targeted for timing of starting reception of the second indicator data transmitted through the second control channel, when it is determined that the reception quality is high;
means (7), which wakes up the mobile communication terminal at the set second wake-up timing, for receiving the second indicator data; and
second determination means (8) for determining a probability of paging based on the received second indicator data.

5. A mobile communication terminal comprising discontinuous reception control means for alternately setting a wake-up period and a sleep period in a standby state, and receiving paging data and TFCI (Transport Format Combination Indicator) indicative of a transmission format of a plurality of control data including the paging data, repeatedly transmitted at a fixed cycle through SCCPCH (Secondary Common Control Pilot Channel) from a base station in the set wake-up period, **characterized in that** the discontinuous reception control means comprises:
means (71) for detecting reception quality of a signal transmitted from the base station;
means (81) for determining whether the detected reception quality is high or low;
means (81) for setting a first wake-up timing targeted for timing of starting reception of the TFCI, when it is determined that the reception quality is low;
means (72), which wakes up the mobile communication terminal at the set first wake-up timing, for receiving the TFCI; and
first determination means (82) for determining a probability of paging based on the received TFCI.

6. The mobile communication terminal according to claim 5, **characterized in that** the discontinuous reception control means further comprises means (84) for skipping over a process of decoding paging data received along with the TFCI and entering a sleep period, when the first determination means (82) determines that there is no probability of paging.

7. The mobile communication terminal according to claim 5, **characterized in that** the means (81) for determining whether the detected reception quality is high or low calculates an average value of reception qualities detected in a plurality of wake-up periods, and compares the calculated average value of the reception qualities with a threshold value, thereby determining whether the detected reception quality is high or low.

8. The mobile communication terminal according to claim 5, **characterized in that** the discontinuous reception control means further comprises:
means (7) for receiving PI (Paging Indicator) transmitted through PICH (Paging Indicator CH) from the base station in the wake-up period, the PI being indicative of presence or absence of transmission of paging data through the SCCPCH;
means (81) for setting a second wake-up timing targeted for timing of starting reception of the PI transmitted through the PICH, when it is determined that the reception quality is high;
means (7), which wakes up the mobile communication terminal at the set second wake-up timing, for receiving the PI; and
second determination means (8) for determining a probability of paging based on the received PI.

9. A discontinuous reception control method of a mobile communication terminal for alternately setting a wake-up period and a sleep period in a standby state, and receiving paging data and first indicator data indicative of a transmission format of a plurality of control data including the paging data, repeatedly transmitted at a fixed cycle through a first control channel from a base station in the set wake-up period, the method **characterized by** comprising:
a step (2c) for detecting reception quality of a signal transmitted from the base station;
a step (2d) for determining whether the detected reception quality is high or low;
a step (2f) for setting a first wake-up timing targeted for timing of starting reception of the first indicator data, when it is determined that the reception quality is low;
a step (3j) (3k) for waking up the mobile communication terminal at the set first wake-up timing and receiving the first indicator data; and
a step (3n) (3o) for determining a probability of paging based on the received first indicator data.

10. The discontinuous reception control method according to claim 9, **characterized by** further comprising a step (2g) for skipping over a process of decoding paging data received along with the first indicator data and entering a sleep period, when it is determined that there is no probability of paging.

11. The discontinuous reception control method according to claim 9, **characterized in that** the step (2d) for determining whether the detected reception quality is high or low includes calculating an average value of reception qualities detected in a plurality of wake-up periods, and comparing the calculated average value of the reception qualities with a threshold value, thereby determining whether the detected reception quality is high or low.

12. The discontinuous reception control method according to claim 9, **characterized by** further comprising:
a step for receiving second indicator data transmitted through a second control channel from the base station in the wake-up period, the second indicator data being indicative of presence or absence of transmission of paging data through the first control channel;
a step (2e) for setting a second wake-up timing targeted for timing of starting reception of the second indicator data transmitted through the second control channel, when it is determined that the reception quality is high;
a step (3b) (3c) for waking up the mobile communication terminal at the set second wake-up timing and receiving the second indicator data; and
a step (3f) for determining a probability of paging based on the received second indicator data.
